# EUROPEAN PATENT APPLICATION

(11) **EP 4 210 213 A1**
(43) Date of publication of application: **12.07.2023**
(21) Application number: 21864189.2
(22) Date of filing: 24.08.2021
(51) Int. Cl.: H02M 7/48

(54) **POWER CONVERSION DEVICE, RAISING/LOWERING DEVICE, POWER CONVERSION METHOD**

(30) Priority: 04.09.2020 JP 2020149335
(71) Applicant: Kabushiki Kaisha Yaskawa Denki, Kitakyushu-shi, Fukuoka 806-0004 (JP)
(72) Inventor: OYA, Hiroaki, Kitakyushu-shi, Fukuoka 806-0004 (JP)
(74) Representative: BRP Renaud & Partner mbB Rechtsanwälte Patentanwälte Steuerberater
(86) International application number: PCT/JP2021/031002
(87) International publication number: WO 2022/050131

(57) **Abstract**

A power conversion device (3) includes a power conversion circuit (30) configured to convert primary power into secondary power by switching on and off a plurality of switching elements (35) at a carrier frequency, a heat generation evaluation unit (115) configured to evaluate, after a secondary current value of the power conversion circuit (30) exceeds a predetermined current threshold, heat generation levels of the plurality of switching elements (35) based on the secondary current value and the carrier frequency, a frequency change unit (116) configured to gradually decrease the carrier frequency over time after an evaluation result of the heat generation levels exceeds a predetermined level, a suppression evaluation unit (117) configured to evaluate an effect of suppressing heat generation by a gradual decrease of the carrier frequency based on the evaluation result of the heat generation levels, and a gradual decrease stop unit (118) configured to stop, before the evaluation result of the heat generation levels falls to the predetermined level, the gradual decrease of the carrier frequency with the frequency change unit (116) based on the evaluation result of the effect of suppressing heat generation.

## Description

### Technical Field

The present disclosure relates to a power conversion device, a lifting and lowering apparatus, and a power conversion method.

### Background Art

Patent Document 1 discloses an overload protection device for an inverter device that calculates an integrated value of an overcurrent based on an output current of the inverter device and a derating amount based on a carrier frequency and generates an overload failure output when the integrated value of the overcurrent exceeds a trip reference value.

### Citation List

### Patent Literature

Patent Document 1: JP 2007-215250 A

### Summary of Invention

### Technical Problem

The present disclosure provides a power conversion device that is effective in suppressing heat generation and suppressing noise in a compatible manner.

### Solution to Problem

A power conversion device according to one aspect of the present disclosure includes a power conversion circuit configured to convert primary power into secondary power by switching on and off a plurality of switching elements at a carrier frequency, a heat generation evaluation unit configured to evaluate, after a secondary current value of the power conversion circuit exceeds a predetermined current threshold, heat generation levels of the plurality of switching elements based on the secondary current value and the carrier frequency, a frequency change unit configured to gradually decrease the carrier frequency over time after an evaluation result of the heat generation levels exceeds a predetermined level, a suppression evaluation unit configured to evaluate an effect of suppressing heat generation by a gradual decrease of the carrier frequency based on the evaluation result of the heat generation levels, and a gradual decrease stop unit configured to stop, before the evaluation result of the heat generation levels falls to the predetermined level, the gradual decrease of the carrier frequency with the frequency change unit based on the evaluation result of the effect of suppressing heat generation.

A lifting and lowering apparatus according to another aspect of the present disclosure includes the power conversion device described above and an electric motor configured to lift or lower an object to be lifted or lowered by the supply of the secondary power.

A power conversion method according to yet another aspect of the present disclosure includes controlling a power conversion circuit to convert primary power into secondary power by switching on and off a plurality of switching elements at a carrier frequency, evaluating, after a secondary current value of the power conversion circuit exceeds a predetermined current threshold, heat generation levels of the plurality of switching elements based on the secondary current value and the carrier frequency, gradually decreasing the carrier frequency over time after an evaluation result of the heat generation levels exceeds a predetermined level, evaluating an effect of suppressing heat generation by a gradual decrease of the carrier frequency based on the evaluation result of the heat generation levels, and stopping, before the evaluation result of the heat generation levels falls to the predetermined level, the gradual decrease of the carrier frequency based on the evaluation result of the effect of suppressing heat generation.

### Advantageous Effects of Invention

The present disclosure provides a power conversion device that is effective in suppressing heat generation and suppressing noise in a compatible manner.

### Brief Description of Drawings

FIG. 1 is a schematic diagram illustrating a configuration of a lifting and lowering system.
FIG. 2 is a block diagram illustrating a hardware configuration of a control circuit.
FIG. 3 is a flow chart illustrating a lifting or lowering control procedure.
FIG. 4 is a flow chart illustrating an adjustment procedure of a carrier frequency.
FIG. 5 is a flow chart illustrating an adjustment procedure of a carrier frequency.
FIG. 6 is a graph showing a transition of a derated current value, a transition of an evaluation result of a heat generation level, and a transition of a carrier frequency.

### Description of Embodiments

Hereinafter, embodiments will be described in detail with reference to the drawings. In the description, elements which are the same or have the same function are given the same reference signs, and redundant descriptions thereof are omitted.

### Apparatus

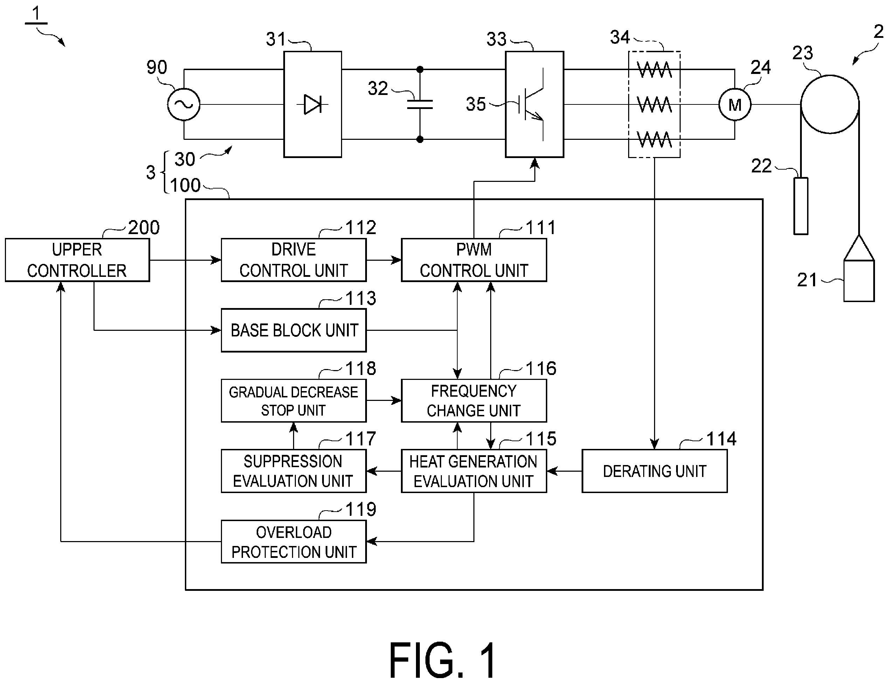

A lifting and lowering system 1 according to the present embodiment is a system for lifting or lowering an object to be lifted or lowered by electric power. Specific examples of the lifting and lowering system 1 include an elevator or a crane. As illustrated in FIG. 1, the lifting and lowering system 1 includes a lifting and lowering apparatus 2 and a power conversion device 3.

The lifting and lowering apparatus 2 lifts or lowers the object to be lifted or lowered by the supply of electric power. The lifting and lowering apparatus 2, which is, for example, an elevator, includes an elevator car 21 on which people get, a counterweight 22, and a winch 23. The winch 23 includes a motor 24 (electric motor). The motor 24 generates driving force by the supply of electric power (secondary power described later). The winch 23 winds up a rope with the driving force generated by the motor 24 to lift the elevator car 21 while lowering the counterweight 22 or to lower the elevator car 21 while lifting the counterweight 22.

The motor 24 may be a synchronous motor or an induction motor. Specific examples of the synchronous motor include a permanent magnet synchronous motor or a synchronous reluctance motor. Specific examples of the permanent magnet synchronous motor include a surface permanent magnet (SPM) motor, an interior permanent magnet (IPM) motor.

The power conversion device 3 converts electric power (primary power) supplied from a power source 90 into driving power (secondary power) and supplies the driving power to the motor 24. The primary power may be alternating current power or may be direct current power. The secondary power is alternating current power. As an example, both the primary power and the secondary power are three-phase alternating current power. For example, the power conversion device 3 includes a power conversion circuit 30 and a control circuit 100.

The power conversion circuit 30 converts the primary power into the secondary power by switching on and off a plurality of switching elements at a carrier frequency, and supplies the secondary power to the motor 24. The power conversion circuit 30, which is, for example, a voltage source inverter, applies a secondary voltage corresponding to a voltage command to the motor 24.

For example, the power conversion circuit 30 includes a converter circuit 31, a smoothing capacitor 32, an inverter circuit 33, and a current sensor 34. The converter circuit 31, which is, for example, a diode bridge circuit or a PWM converter circuit, converts the above source power to direct current power. The smoothing capacitor 32 smooths the above direct current power.

The inverter circuit 33 converts power between the above direct current power and the above driving power. For example, the inverter circuit 33 includes a plurality of switching elements 35 and converts the above power by switching on and off the plurality of switching elements 35. The switching element 35, which is, for example, a power metal oxide semiconductor field effect transistor (MOSFET) or an insulated gate bipolar transistor (IGBT), switches on and off according to a gate drive signal.

The current sensor 34 detects a current flowing between the inverter circuit 33 and the motor 24. Hereinafter, the current flowing between the inverter circuit 33 and the motor 24 is referred to as a "secondary current." For example, the current sensor 34 may be configured to detect currents of all phases (U-phase, V-phase and W-phase) of three-phase alternating current or may be configured to detect currents of any two phases of three-phase alternating current. As long as no zero-phase current is generated, the sum of the currents of U-phase, V-phase, and W-phase is zero, and the information of the currents of all phases is obtained even when the currents of two phases are detected.

The configuration of the power conversion circuit 30 described above is just an example and can be changed in any way as long as driving power can be supplied to the motor 24. For example, the power conversion circuit 30 may be a current source inverter. The current source inverter outputs a drive current according to a current command to the motor 24. When the source power is direct current power, the power conversion circuit 30 needs not include the converter circuit 31. The power conversion circuit 30 may be a matrix converter circuit that bidirectionally converts power between the source power and the drive power without direct current conversion.

The control circuit 100 controls the power conversion circuit 30 so as to supply driving power to the motor 24. When, for example, the power conversion circuit 30 is a voltage source inverter, the control circuit 100 controls the power conversion circuit 30 to apply the drive voltage corresponding to the voltage command to the motor 24. When the power conversion circuit 30 is a current source inverter, the control circuit 100 controls the power conversion circuit 30 to apply the drive current corresponding to the current command to the motor 24.

A device operated by the secondary power generated by switching on and off a plurality of switching elements at a carrier frequency generates less noise as the carrier frequency gets higher. However, the higher the carrier frequency is, the more the heat generation of a plurality of switching elements caused by so-called switching loss is increased. Thus, when the secondary current increases during the load increase in the above device, total heat generation of heat generation caused by a steady current (hereinafter referred to as "steady heat generation") and heat generation caused by the switching loss (hereinafter referred to as "switching heat generation") tends to become excessive.

On the other hand, the control circuit 100 is configured to execute controlling the power conversion circuit 30 to convert the primary power into the secondary power by switching on and off the plurality of switching elements 35 at a carrier frequency, evaluating, after a secondary current value of the power conversion circuit 30 exceeds a predetermined current threshold, heat generation levels of the plurality of switching elements 35 based on the secondary current value and the carrier frequency, gradually decreasing the carrier frequency over time after an evaluation result of the heat generation levels exceeds a predetermined level, evaluating an effect of suppressing heat generation by the gradual decrease of the carrier frequency based on the evaluation result of the heat generation levels, and stopping, before the evaluation result of the heat generation levels falls to the predetermined level, the gradual decrease of the carrier frequency based on the evaluation result of the effect of suppressing heat generation. This can adjust, for each load magnitude, the carrier frequency to a value appropriate for suppressing noise and suppressing heat generation in a compatible manner.

Hereinafter, the configuration of the control circuit 100 will be exemplified in more detail. As illustrated in FIG. 1, the control circuit 100 includes, as a functional configuration (hereinafter referred to as a "functional block"), a PWM control unit 111, a drive control unit 112, a base block unit 113, a derating unit 114, a heat generation evaluation unit 115, a frequency change unit 116, a suppression evaluation unit 117, a gradual decrease stop unit 118, and an overload protection unit 119.

The PWM control unit 111 controls the power conversion circuit 30 such that the secondary voltage corresponding to the voltage command is applied to the motor 24. For example, the PWM control unit 111 switches on and off each of the plurality of switching elements 35 in the control cycle of the carrier frequency and outputs the secondary voltage corresponding to the voltage command according to the ratio of on and off periods of each switching element 35 in 1 cycle. The method for calculating on and off periods of each switching element 35 is not limited to particular methods, may be a well-known triangular wave comparison method, or may be a spatial vector modulation method. For example, the PWM control unit 111 switches each switching element 35 on or off by the output of the above gate drive signal.

The carrier frequency is variable according to the user setting. The carrier frequency is also changed with the frequency change unit 116 described below. When the carrier frequency is changed, the PWM control unit 111 switches the plurality of switching elements 35 on and off at the changed carrier frequency.

The drive control unit 112 calculates a voltage command to operate the lifting and lowering apparatus 2 according to a command from an upper controller 200 and outputs the command to the PWM control unit 111. Specific examples of the upper controller 200 include a programmable logic controller. Specific examples of the command from the upper controller 200 include a lifting or lowering start command and a lifting or lowering stop command.

When a lifting or lowering start command is acquired from the upper controller 200, the drive control unit 112 repeats, in a control cycle for a predetermined period, generating a voltage command to cause the rotation speed of the motor 24 to follow a predetermined speed pattern and outputting the voltage command to the PWM control unit 111. When a lifting or lowering stop command is acquired from the upper controller 200, the drive control unit 112 repeats, in the above control cycle, generating a voltage command to cause the rotation speed of the motor 24 to follow the predetermined deceleration/stop pattern and outputting the voltage command to the PWM control unit 111. The upper controller 200 activates the brakes of the winch 23 and outputs a base block command after the drive control unit 112 stops the motor 24.

The base block unit 113 stops the output of secondary power with the power conversion circuit 30 according to a base block command from the upper controller 200. For example, the base block unit 113 stops the output of secondary power by blocking the output of the gate drive signal from PWM control unit 111 to each switching element 35.

The derating unit 114 acquires the secondary current value detected by the current sensor 34 and derates the secondary current value by an adjustment rate that increases as the carrier frequency increases. Hereinafter, the derated secondary current value is referred to as a "derated current value."

For example, the derating unit 114 derives an adjustment rate corresponding to the carrier frequency based on: a pre-generated rate profile representing a relationship between the carrier frequency and the rate; and the present carrier frequency and multiplies the secondary current value by the derived adjustment rate to calculate the derated current value. The derating unit 114 repeats derating in the above control cycle.

The rate in the rate profile may be specified to approximate the ratio of the above total heat generation to the above steady heat generation (value of the above total heat generation divided by the above steady heat generation). Hereinafter, this rate profile is referred to as a "first rate profile."

As described above, the switching heat generation increases as the carrier frequency increases, so that the rate in the first rate profile increases as the carrier frequency increases. The derating unit 114 derives the rate corresponding to the present carrier frequency in the first rate profile as the adjustment rate.

The rate in the rate profile may be specified to approximate the ratio of the above steady heat generation to the above total heat generation (value of the above steady heat generation divided by the above total heat generation). Hereinafter, this rate profile is referred to as a "second rate profile."

As described above, the switching heat generation increases as the carrier frequency increases, so that the rate in the second rate profile decreases as the carrier frequency increases. The derating unit 114 derives the reciprocal of the rate corresponding to the current carrier frequency in the second rate profile as the adjustment rate.

The heat generation evaluation unit 115 evaluates the heat generation levels of the plurality of switching elements 35 based on the secondary current value and the carrier frequency after the secondary current value of the power conversion circuit 30 exceeds a predetermined current threshold (hereinafter referred to as "evaluation start threshold"). The heat generation level means, for example, the magnitude of the above total heat generation.

For example, the heat generation evaluation unit 115 evaluates the heat generation level based on the integrated value of the difference between the derated current value and the evaluation start threshold after the derated current value (an example of the secondary current value) exceeds the evaluation start threshold. For example, the heat generation evaluation unit 115 calculates the time integrated value of the difference between the derated current value and the evaluation start threshold as an evaluation result of the heat generation level. The heat generation evaluation unit 115 evaluates the heat generation level at each derating by the derating unit 114 in the above control cycle.

As described above, the derated current value is derived based on the secondary current value detected by the current sensor 34 and the present carrier frequency. Thus, evaluating the heat generation level by the method described above based on the derated current value is an example of evaluating the heat generation level based on the secondary current value and the evaluation start threshold. Note that the method of evaluating heat generation level is not limited to the method based on the derated current value.

The heat generation evaluation unit 115 derives the total heat generation corresponding to the current secondary current value and the present carrier frequency based on the heat generation profile generated in advance so as to represent the relationship between the secondary current value, the carrier frequency, and the total heat generation. This may be the evaluation result of heat generation level. The secondary current value in this case may be the pre-derated secondary current value or the derated current value.

Instead of derating the secondary current value, the derating unit 114 may derate the evaluation start threshold by a threshold adjustment rate that decreases as the carrier frequency increases. Hereinafter, the derated evaluation start threshold is referred to as a "derated threshold." For example, the derating unit 114 derives a threshold adjustment rate according to the carrier frequency based on a pre-generated rate profile representing the relationship between the carrier frequency and the rate and the present carrier frequency and multiplies the evaluation start threshold by the threshold adjustment rate to calculate the derated threshold.

The derating unit 114 may derive the reciprocal of the rate corresponding to the present carrier frequency in the first rate profile as the threshold adjustment rate. The derating unit 114 may derive the rate corresponding to the present carrier frequency in the second rate profile as the threshold adjustment rate. In this case, the heat generation evaluation unit 115 may evaluate the heat generation level based on the integrated value of the difference between the secondary current value and the derated threshold by the derating unit 114. For example, the heat generation evaluation unit 115 may evaluate the heat generation level based on the integrated value of the difference between the secondary current value and the derated threshold after the secondary current value exceeds the derated threshold (an example of the evaluation start threshold). For example, the heat generation evaluation unit 115 may calculate the time integral of the difference between the secondary current value and the derated threshold as the evaluation result of the heat generation level.

The frequency change unit 116 gradually decreases the carrier frequency over time after the evaluation result, by the heat generation evaluation unit 115, of the heat generation level exceeds the predetermined level (hereinafter referred to as a "gradual decrease start level"). For example, the frequency change unit 116 repeats, in the above control cycle, reducing the carrier frequency by a predetermined gradual decrease step. In the gradual decrease process of the carrier frequency, the frequency change unit 116 may change the above gradual decrease step. For example, the frequency change unit 116 may reduce the above gradual decrease step, as the increasing rate of the heat generation level decreases.

The frequency change unit 116 may return the carrier frequency to the frequency before the start of the gradual decrease in response to the base block unit 113 stopping the output of secondary power with the power conversion circuit 30. Here, "in response to the stopping" does not necessarily mean the execution just before or just after the timing when the output of the secondary power stops, but also the execution between the stop and the start of the next operation.

The suppression evaluation unit 117 evaluates, based on the evaluation result of the heat generation level with the heat generation evaluation unit 115, the effect of suppressing heat generation by gradual decrease of the carrier frequency with the frequency change unit 116. For example, the suppression evaluation unit 117 calculates the increasing rate of the evaluation result of the heat generation level as an evaluation result of the suppression effect. As an example, the suppression evaluation unit 117 calculates the above increasing rate based on the evaluation result of the heat generation level and the evaluation result of the last heat generation level. The "evaluation result of the last heat generation level" is the evaluation result of the heat generation level in the control cycle that is one cycle before the present control cycle. More specifically, the suppression evaluation unit 117 calculates the difference, as the increasing rate, between the evaluation result of the heat generation level and the evaluation result of the last heat generation level divided by the time period for one control cycle.

The gradual decrease stop unit 118 stops the gradual decrease of carrier frequency with the frequency change unit based on the evaluation result of the effect of suppressing heat generation by the suppression evaluation unit 117 before the evaluation result of the heat generation level with the heat generation evaluation unit 115 falls to the gradual decrease start level. For example, the gradual decrease stop unit 118 stops the frequency change unit 116 from gradually decreasing the carrier frequency in response to the increasing rate falling below a predetermined threshold (hereinafter referred to as a "gradual decrease stop threshold"). The gradual decrease stop threshold may be zero or a negative value. In this case, the gradual decrease of the carrier frequency is continued until the increasing rate becomes zero or negative, thus improving the certainty of heat generation suppression. The gradual decrease stop threshold may be a positive value. In this case, the gradual decrease of the carrier frequency stops earlier, thus improving the certainty of noise suppression.

The evaluation result of the effect of suppressing heat generation is not necessarily limited to the increasing rate. The suppression evaluation unit 117 may derive any value that can represent an effect of suppressing heat generation. For example, the suppression evaluation unit 117 may calculate the decrease range after the evaluation result of the heat generation level reaches the peak value as the evaluation result of the effect of suppressing heat generation. In this case, the gradual decrease stop unit 118 may stop the frequency change unit 116 from gradually decreasing the carrier frequency as the decrease range exceeds a predetermined threshold.

The overload protection unit 119 trips the power conversion circuit 30 when the evaluation result of the heat generation level reaches the upper limit level higher than the gradual decrease start level. For example, the overload protection unit 119 requests the upper controller 200 to output a lifting or lowering stop command. In response to the command, the upper controller 200 outputs a lifting or lowering stop command, and in response to the command, the drive control unit 112 stops the motor 24. After the drive control unit 112 stops the motor 24, the upper controller 200 activates the brakes of the winch 23 and outputs a base block command. The base block unit 113 stops the output of secondary power with the power conversion circuit 30 according to the base block command from the upper controller 200.

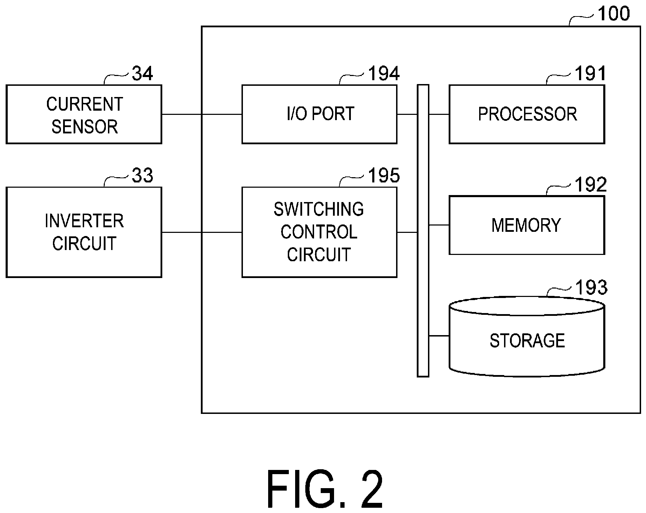

FIG. 2 is a block diagram illustrating a hardware configuration of the control circuit 100. As illustrated in FIG. 2, the control circuit 100 includes one or a plurality of processors 191, a memory 192, a storage 193, an I/O port 194, and a switching control circuit 195. The storage 193 includes a storage medium that can be read by a computer, such as a non-volatile semiconductor memory. The storage 193 stores a program for causing the control circuit 100 to execute controlling the power conversion circuit 30 to convert primary power into secondary power by switching on and off a plurality of switching elements 35 at a carrier frequency, evaluating, after a secondary current value of the power conversion circuit 30 exceeds a predetermined current threshold, heat generation levels of the plurality of switching elements 35 based on the secondary current value and the carrier frequency, gradually decreasing the carrier frequency over time after an evaluation result of the heat generation levels exceeds a predetermined level, evaluating an effect of suppressing heat generation by a gradual decrease of the carrier frequency based on the evaluation result of the heat generation levels, and stopping, before the evaluation result of the heat generation levels falls to the predetermined level, the gradual decrease of the carrier frequency based on the evaluation result of the effect of suppressing heat generation. For example, the storage 193 stores a program for causing the control circuit 100 to configure each of the aforementioned function blocks.

The memory 192 temporarily stores the program loaded from the storage medium of the storage 193 and the calculation result from a processor 191. The processor 191 constructs each function block of the control circuit 100 by executing the above program in cooperation with the memory 192. The I/O port 194 inputs and outputs information to and from the current sensor 34 based on the command from the processor 191. The switching control circuit 195 outputs the above driving power to the motor 24 by switching on and off the plurality of switching elements 35 in the inverter circuit 33 according to a command from the processor 191.

The control circuit 100 is not necessarily limited to those that constitute each function by a program. For example, the control circuit 100 may configure at least some functions with a dedicated logic circuit or an application specific integrated circuit (ASIC) integrating the logic circuit.

### Control Procedure

Then, as an example of the power conversion method, a control procedure performed by the control circuit 100 will be illustrated. This control procedure includes controlling the power conversion circuit 30 to convert primary power into secondary power by switching on and off a plurality of switching elements 35 at a carrier frequency, evaluating, after a secondary current value of the power conversion circuit 30 exceeds a predetermined current threshold, heat generation levels of the plurality of switching elements 35 based on the secondary current value and the carrier frequency, gradually decreasing the carrier frequency over time after an evaluation result of the heat generation levels exceeds a predetermined level, evaluating an effect of suppressing heat generation by a gradual decrease of the carrier frequency based on the evaluation result of the heat generation levels, and stopping, before the evaluation result of the heat generation levels falls to the predetermined level, the gradual decrease of the carrier frequency based on the evaluation result of the effect of suppressing heat generation. Hereinafter, the control procedure will be described in detail, which is divided into a lifting or lowering control procedure and a carrier frequency adjustment procedure during the lifting or lowering control.

### Lifting or Lowering Control Procedure

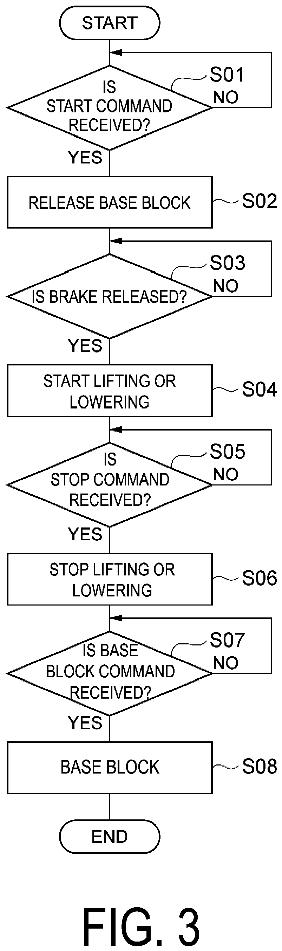

As illustrated in FIG. 3, the control circuit 100 executes steps S01, S02, S03, S04, S05, S06, S07, and S08 in this order. In step S01, the drive control unit 112 waits for a lifting or lowering start command from the upper controller 200. In step S02, the drive control unit 112 releases the base block by the base block unit 113. In step S03, the drive control unit 112 waits for the upper controller 200 to release the brakes on the winch 23.

In step S04, the drive control unit 112 starts control to cause the rotation speed of the motor 24 to follow a predetermined speed pattern. Thereafter, the drive control unit 112 repeats, in a control cycle for a predetermined period, generating a voltage command to cause the rotation speed of the motor 24 to follow the predetermined speed pattern and outputting the voltage command to the PWM control unit 111.

In step S05, the drive control unit 112 waits for a lifting or lowering stop command from the upper controller 200. In step S06, the drive control unit 112 stops the motor 24 in a predetermined deceleration and stop pattern. For example, the drive control unit 112 repeats, in the above control cycle, generating a voltage command to cause the rotation speed of the motor 24 to follow the predetermined deceleration and stop pattern and outputting the voltage command to the PWM control unit 111 and stops the motor 24. In step S07, the base block unit 113 waits for a base block command from the upper controller 200. In step S08, the base block unit 113 stops the power conversion circuit 30 from outputting the secondary power. This completes the lifting or lowering control procedure.

### Carrier Frequency Adjustment Procedure

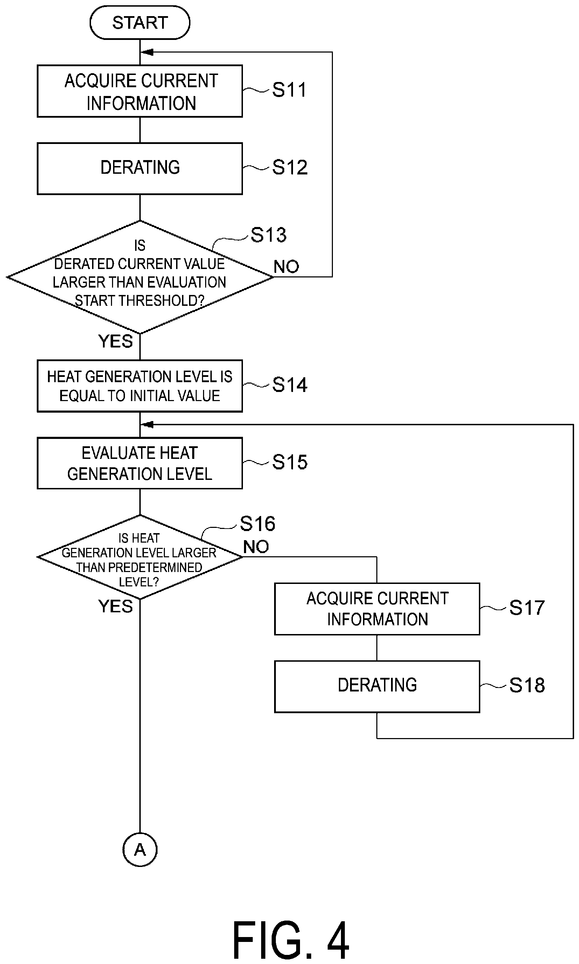

As illustrated in FIG. 4, the control circuit 100 first performs steps S11, S12 and S13. In step S11, the derating unit 114 acquires the secondary current value detected by the current sensor 34. In step S12, the derating unit 114 derates the secondary current value by an adjustment rate that increases as the carrier frequency increases. In step S13, the heat generation evaluation unit 115 checks whether the derated current value exceeds an evaluation start threshold.

When it is determined in step S13 that the derated current value does not exceed the evaluation start threshold, the control circuit 100 returns the process to step S11. Thereafter, until the derated current value exceeds the evaluation start threshold, the control circuit 100 repeats, in the above control cycle, acquiring the detection result of the secondary current value and derating.

When it is determined in step S13 that the derated current value exceeds the evaluation start threshold, the control circuit 100 starts to evaluate the heat generation level based on the integrated value of the difference between the derated current value and the evaluation start threshold. For example, the control circuit 100 first performs steps S14, S15, and S16. In step S14, the heat generation evaluation unit 115 sets the initial value to the evaluation result of the heat generation level. The initial value is, for example, zero.

In step S15, the heat generation evaluation unit 115 multiplies the difference between the derated current value and the evaluation start threshold by one period of the control cycle and adds the multiplication result to the evaluation result of the heat generation level. Hereinafter, the multiplication result to be added is referred to an "evaluation result for one cycle." In step S16, the frequency change unit 116 checks whether the evaluation result of the heat generation level has exceeded the above gradual decrease start level.

When it is determined in step S16 that the evaluation result of the heat generation level does not exceed the gradual decrease start level, the control circuit 100 executes steps S17 and S18. In step S17, the derating unit 114 acquires the secondary current value detected by the current sensor 34. In step S18, the derating unit 114 derates the secondary current value in the same manner as in step S12. Thereafter, the control circuit 100 then returns the process to step S 15. Thereafter, until the evaluation result of the heat generation level exceeds the gradual decrease start level, the control circuit 100 repeats, in the control cycle, calculating the evaluation result for one cycle and adding it to the evaluation result of the heat generation level.

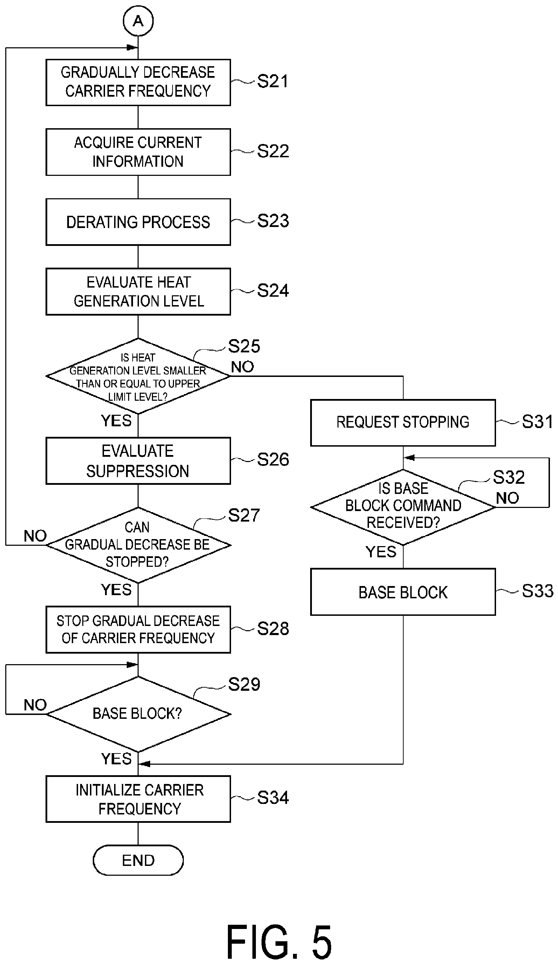

When it is determined in step S16 that the evaluation result of the heat generation level has exceeded the gradual decrease start level, the control circuit 100 executes steps S21, S22, S23, S24, and S25, as illustrated in FIG. 5. In step S21, the frequency change unit 116 subtracts the above gradual decrease step from the carrier frequency and outputs the subtraction result to the PWM control unit 111 as a new carrier frequency. In step S22, the derating unit 114 acquires the secondary current value detected by the current sensor 34.

In step S23, the derating unit 114 derates the secondary current value in the same manner as in step S12. In step S24, the heat generation evaluation unit 115 calculates the evaluation result for 1 cycle and adds it to the evaluation result of the heat generation level, as in step S15. In step S25, the overload protection unit 119 checks whether the evaluation result of the heat generation level is below the above upper limit level.

When it is determined in step S25 that the evaluation result of the heat generation level is below the upper limit level, the control circuit 100 executes steps S26 and S27. In step S26, based on the evaluation result of the heat generation level from the heat generation evaluation unit 115, the suppression evaluation unit 117 evaluates the effect of suppressing heat generation due to gradual decrease of the carrier frequency with the frequency change unit 116. For example, the suppression evaluation unit 117 calculates an increasing rate of the evaluation result of the heat generation level as an evaluation result of the suppression effect. In step S27, the gradual decrease stop unit 118 checks whether the increasing rate has fallen below the gradual decrease stop threshold.

When it is determined in step S27 that the increasing rate is not below the gradual decrease stop threshold, the control circuit 100 returns the process to step S21. Thereafter, until the heat generation level exceeds the upper limit level or the increasing rate falls below the gradual decrease stop threshold, the control circuit 100 repeats, in the control cycle, the gradual decrease of the carrier frequency, the evaluation of the heat generation level, and the evaluation of the effect of suppressing heat generation.

When it is determined in step S27 that the increasing rate falls below the gradual decrease stop threshold, the control circuit 100 executes steps S28 and S29. In step S28, the gradual decrease stop unit 118 stops the frequency change unit 116 from gradually decreasing the carrier frequency. In step S29, the frequency change unit 116 waits for the base block unit 113 to stop the output of the secondary power with the power conversion circuit 30.

When it is determined in step S25 that the evaluation result of the heat generation level exceeds the upper limit level, the control circuit 100 executes steps S31, S32, and S33. In step S31, the overload protection unit 119 requests the upper controller 200 to output a lifting or lowering stop command. In step S32, the base block unit 113 waits for a base block command from the upper controller 200. In step S33, the base block unit 113 stops the power conversion circuit 30 from outputting the secondary power.

After steps S28 and S33, the control circuit 100 executes step S34. In step S34, the frequency change unit 116 returns the carrier frequency to the frequency before the start of gradual decrease and outputs it as a new carrier frequency to the PWM control unit 111. This completes the carrier frequency adjustment procedure.

### Examples of Waveforms

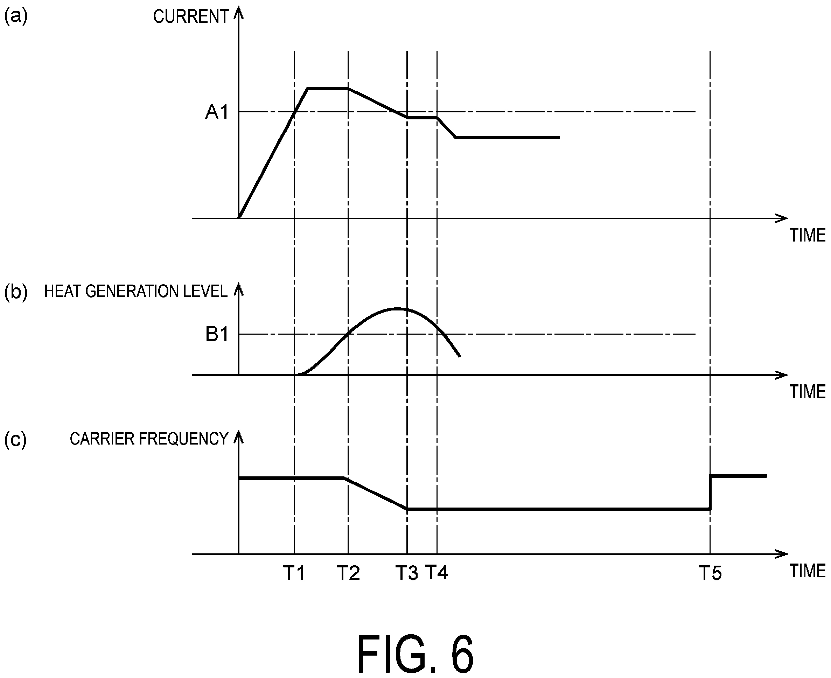

With reference to FIG. 6, the transition of the current value after derating in the above carrier frequency adjustment procedure, the transition of the evaluation result of the heat generation level, and the transition of the carrier frequency are illustrated. FIG. 6(a) illustrates the transition of current value after derating. In FIG. 6(a), the horizontal axis illustrates the elapsed time, and the vertical axis illustrates the magnitude of the secondary current value. FIG. 6(b) illustrates the transition of the evaluation result of the heat generation level. In FIG. 6(b), the horizontal axis illustrates the elapsed time, and the vertical axis illustrates the magnitude of the evaluation result of the heat generation level. FIG. 6(c) illustrates the transition of the carrier frequency. In FIG. 6(c), the horizontal axis illustrates the elapsed time and the vertical axis illustrates the magnitude of the carrier frequency.

In the example of FIG. 6, the current value after derating increases to a level determined by the acceleration rate with acceleration after the lifting or lowering start. The current value after derating exceeds an evaluation start threshold A1 at time T1. This causes the evaluation result of the heat generation level begin to increase. The evaluation result of the heat generation level exceeds a gradual decrease start level B1 at time T2. This causes a gradual decrease of the carrier frequency to begin. As the carrier frequency begins to gradually decrease, the current value after derating gradually decreases to below the evaluation start threshold A1. This turns, at time T3, the increasing rate in the evaluation result of the heat generation level to a negative value (begins to decrease), and the gradual decrease of the carrier frequency stops.

At time T4, the current value after derating further decreases in response to the shift of the acceleration control of the motor 24 to the constant speed control of the motor 24. When, at time T5, the output of the secondary power with the power conversion circuit 30 is completed, the carrier frequency is returned to the value before the start of gradual decrease.

Thus, in the above carrier frequency adjustment procedure, the heat generation level is suppressed by the gradual decrease of the carrier frequency, but the gradual decrease of the carrier frequency stops at the timing when the rise of the heat generation level is suppressed to the desired level. Therefore, the carrier frequency decrease is minimized to the extent that the increase of the heat generation level can be suppressed to the desired level.

### Effects of the Present Embodiment

As described above, the power conversion device 3 includes the power conversion circuit 30 configured to convert primary power into secondary power by switching on and off the plurality of switching elements 35 at a carrier frequency, the heat generation evaluation unit 115 configured to evaluate, after a secondary current value of the power conversion circuit 30 exceeds a predetermined current threshold, heat generation levels of the plurality of switching elements 35 based on the secondary current value and the carrier frequency, the frequency change unit 116 configured to gradually decrease the carrier frequency over time after an evaluation result of the heat generation levels exceeds a predetermined level, the suppression evaluation unit 117 configured to evaluate an effect of suppressing heat generation by a gradual decrease of the carrier frequency based on the evaluation result of the heat generation levels, and the gradual decrease stop unit 118 configured to stop, before the evaluation result of the heat generation levels falls to the predetermined level, the gradual decrease of the carrier frequency with the frequency change unit 116 based on the evaluation result of the effect of suppressing heat generation.

In a device operated by secondary power generated by switching on and off a plurality of switching elements at a carrier frequency, the higher the carrier frequency, the less noise is generated. However, the higher the carrier frequency, the greater the heat generation of the plurality of switching elements caused by so-called switching loss. Thus, when the load in the above device becomes large and the secondary current becomes large, the total heat generated by combining the heat generated by the secondary current and the heat generated by the switching loss tends to become excessive.

On the other hand, the present power conversion device 3 gradually decreases the carrier frequency after the heat generation level exceeds the predetermined level and stops the gradual decrease of the carrier frequency based on the evaluation result of the effect of suppressing heat generation. This can adjust, for each load magnitude, the carrier frequency to a value appropriate for suppressing noise and suppressing heat generation in a compatible manner. Thus, it is effective in suppressing noise and suppressing heat generation in a compatible manner.

The suppression evaluation unit 117 may calculate an increasing rate of the evaluation result of the heat generation level as the evaluation result of the effect of suppressing heat generation. The gradual decrease stop unit 118 may stop the gradual decrease of the carrier frequency with the frequency change unit 116 in response to the increasing rate falling below a predetermined stop threshold. In this case, based on the increasing rate in the evaluation result of the heat generation level, the effect of suppressing heat generation can be more appropriately evaluated and the gradual decrease of the carrier frequency can be stopped at a more appropriate timing. Thus, it is more effective in suppressing heat generation and suppressing noise in a compatible manner.

The stop threshold may be zero or a negative value. In this case, heat generation can be more reliably suppressed.

The suppression evaluation unit 117 may calculate a decrease range of the evaluation result of the heat generation level after reaching a peak value as the evaluation result of the effect of suppressing heat generation. The gradual decrease stop unit 118 may stop the gradual decrease of the carrier frequency with the frequency change unit 116 in response to the decrease range exceeding a predetermined stop threshold. In this case, heat generation can be more reliably suppressed.

The power conversion device 3 may further include the base block unit 113 configured to stop the output of the secondary power with the power conversion circuit 30. The frequency change unit 116 may return the carrier frequency to the frequency before the start of the gradual decrease in response to the base block unit 113 stopping the output of the secondary power with the power conversion circuit 30. In this case, suppressing heat generation and suppressing noise in a compatible manner can be more reliably achieved.

The power conversion device 3 may further include the overload protection unit 119 configured to trip the power conversion circuit 30 when the evaluation result of the heat generation level reaches an upper limit level higher than the predetermined level. In this case, the calculation load in the power conversion device 3 can be reduced by sharing the evaluation result of the heat generation level with the suppression of heat generation by the gradual decrease of carrier frequency and the overload protection by the trip of the power conversion circuit 30.

The power conversion device 3 may further include the derating unit 114 configured to derate the secondary current value by a rate that increases as the carrier frequency increases. The heat generation evaluation unit 115 may evaluate the heat generation level based on an integrated value of the difference between the secondary current value derated by the derating unit 114 and the current threshold. In this case, the heat generation level can be easily evaluated based on the derated secondary current value.

The power conversion device 3 may further include the derating unit 114 configured to derate the current threshold by a rate that decreases as the carrier frequency increases. The heat generation evaluation unit 115 may evaluate the heat generation level based on an integrated value of the difference between the secondary current value and the current threshold derated by the derating unit 114. In this case, the reliability of the evaluation of the heat generation level based on the derated secondary current value can be improved.

As described above, the present disclosure is not necessarily limited to the above described embodiments, and various modifications can be made without departing from the gist of the disclosure.

### Reference Signs List

2 Lifting and lowering apparatus
3 Power conversion device
24 Motor (Electric motor)
30 Power conversion circuit
35 Switching element
113 Base block unit
114 Derating unit
115 Heat generation evaluation unit
116 Frequency change unit
117 Suppression evaluation unit
118 Gradual decrease stop unit
119 Overload protection unit

## Claims

1. A power conversion device, comprising:
a power conversion circuit configured to convert primary power into secondary power by switching on and off a plurality of switching elements at a carrier frequency;
a heat generation evaluation unit configured to evaluate, after a secondary current value of the power conversion circuit exceeds a predetermined current threshold, heat generation levels of the plurality of switching elements based on the secondary current value and the carrier frequency;
a frequency change unit configured to gradually decrease the carrier frequency over time after an evaluation result of the heat generation levels exceeds a predetermined level;
a suppression evaluation unit configured to evaluate an effect of suppressing heat generation by a gradual decrease of the carrier frequency based on the evaluation result of the heat generation levels; and
a gradual decrease stop unit configured to stop, before the evaluation result of the heat generation levels falls to the predetermined level, the gradual decrease of the carrier frequency with the frequency change unit based on the evaluation result of the effect of suppressing heat generation.

2. The power conversion device according to claim 1, wherein
the suppression evaluation unit calculates an increasing rate of the evaluation result of the heat generation levels as the evaluation result of the effect of suppressing heat generation, and
the gradual decrease stop unit stops the gradual decrease of the carrier frequency with the frequency change unit in response to the increasing rate falling below a stop threshold predetermined.

3. The power conversion device according to claim 2, wherein the stop threshold is zero or a negative value.

4. The power conversion device according to claim 1, wherein
the suppression evaluation unit calculates, as the evaluation result of the effect of suppressing heat generation, a decrease range of the evaluation result of the heat generation levels after reaching a peak value, and
the gradual decrease stop unit stops the gradual decrease of the carrier frequency with the frequency change unit in response to the decrease range exceeding a predetermined stop threshold.

5. The power conversion device according to any one of claims 1 to 4, further comprising
a base block unit configured to stop output of the secondary power with the power conversion circuit, wherein
the frequency change unit returns the carrier frequency to a frequency before a start of the gradual decrease in response to the base block unit stopping the output of the secondary power with the power conversion circuit.

6. The power conversion device according to any one of claims 1 to 5, further comprising
an overload protection unit configured to trip the power conversion circuit when the evaluation result of the heat generation levels reaches an upper limit level higher than the predetermined level.

7. The power conversion device according to any one of claims 1 to 6, further comprising
a derating unit configured to derate the secondary current value by a rate that increases as the carrier frequency increases, wherein
the heat generation evaluation unit evaluates the heat generation levels based on an integrated value of a difference between the secondary current value derated by the derating unit and the current threshold.

8. The power conversion device according to any one of claims 1 to 6, further comprising
a derating unit configured to derate the current threshold by a rate that decreases as the carrier frequency increases, wherein
the heat generation evaluation unit evaluates the heat generation levels based on an integrated value of a difference between the secondary current value and the current threshold derated by the derating unit.

9. A lifting and lowering apparatus, comprising:
the power conversion device according to any one of claims 1 to 8; and
an electric motor configured to lift or lower an object to be lifted or lowered by supply of the secondary power.

10. A power conversion method, comprising:
controlling a power conversion circuit to convert primary power into secondary power by switching on and off a plurality of switching elements at a carrier frequency;
evaluating, after a secondary current value of the power conversion circuit exceeds a predetermined current threshold, heat generation levels of the plurality of switching elements based on the secondary current value and the carrier frequency;
gradually decreasing the carrier frequency over time after an evaluation result of the heat generation levels exceeds a predetermined level;
evaluating an effect of suppressing heat generation by a gradual decrease of the carrier frequency based on the evaluation result of the heat generation levels; and
stopping, before the evaluation result of the heat generation levels falls to the predetermined level, the gradual decrease of the carrier frequency based on the evaluation result of the effect of suppressing heat generation.
